# EUROPEAN PATENT APPLICATION

(11) **EP 4 571 215 A1**
(43) Date of publication of application: **18.06.2025**
(21) Application number: 24208608.0
(22) Date of filing: 24.10.2024
(51) Int. Cl.: F24S 30/00, F16F 7/104, F16F 7/116

(54) **VIBRATION DAMPING SYSTEM IN A SOLAR TRACKER**

(30) Priority: 14.12.2023 ES 202332225 U
(71) Applicant: Trina Solar Spain, S.L.U., 28050 Madrid (ES)
(72) Inventor: VOSHCHENKO GAMERNYK, Andriy, 28050 Madrid (ES)
(74) Representative: Evens, Paul Jonathan

(57) **Abstract**

The present invention relates to a vibration damping system, for those vibrations that are produced in a solar tracker (1), by means of at least one damping device (2) having damping means (4) that absorb the vibrations produced, characterised in that the damping device (2) is removably attachable on at least one panel (1.1) of the solar tracker (1), the damping device (2) comprising at least one mass (3) movably suspended along a cavity (2.1) of the device (2) by attachment with damping means (4), and the mass (3) being movable within the cavity (2.1) perpendicular to the panel in the operative position.

## Description

### Technical field

In the photovoltaic sector, the problem of vibrations generated in solar trackers is known, produced, for example, by the rotation of the shaft of the solar tracker and the meteorological conditions on the panels such as the wind, making it necessary to establish damping systems that prevent or minimise said vibrations and allow greater durability and efficiency of the solar tracker.

### State of the art

Solar trackers are known, consisting mainly of a rotation shaft supported by posts and on which solar panels are arranged that are oriented depending on solar radiation. When the rotation shaft is actuated, even if it is a controlled movement, it can give rise to vibrations due to friction or abrupt changes in speed when starting or braking the actuation. Furthermore, given that the panels arranged on the rotation shaft are planar surfaces, atmospheric conditions such as rain, hail or wind can impact, generating vibrations in the assembly. These vibrations, along with other known vibrations, reduce the useful life of the parts in the solar tracker and generate operative inefficiency.

A common way to dampen vibrations is with a torsional vibration damping device such as that in document US2021167721 having a moving member rigidly connected to the rotating shaft to move with same and a stationary member rigidly attached to the fixed structure.

An alternative solution is described in document CN213521776, which discloses a manner for solving the vibrations caused in solar panels by means of a passive damping device that is attached to the ground at one end and to the panel at the other. Said device has a rod attached to the panel that is inserted into a cylinder rotatably attached to the ground or to the foot of the solar tracker. In the cylinder, a spring dampens the vibrations transmitted by the rod from the panel, thus causing the damping. The biggest drawback of this system is that it involves a complex installation and requires modifications to the solar panel, in addition to offering different damping depending on the angle of the panel and the position of the rod with respect to the spring, so it is not constant damping.

In view of the described drawbacks of the currently existing solutions, a solution is necessary that allows the damping of the vibrations caused in a solar tracker that does not involve the modification of the solar tracker.

### Object of the invention

In order to fulfil this objective and solve the technical problems discussed so far, in addition to providing additional advantages that can be derived later, the present invention relates to a vibration damping system, for those vibrations that are produced in a solar tracker, by means of at least one damping device having damping means that absorb the vibrations produced, characterised in that the damping device is removably attachable on at least one panel of the solar tracker, the damping device comprising at least one mass movably suspended along a cavity of the device by attachment with damping means, and the mass being movable within the cavity perpendicular to the panel in the operative position.

The operative position of the system should be understood as that position in which the damping device of the vibration damping system is attached to a panel while the solar tracker is in operation. Upper is understood as the part closest to where the sun hits the panel and lower is the part closest to the ground.

Preferably, the device has a longitudinal dimension perpendicular to the panel on which it is attached, being in the cavity therein where the movable mass is arranged along said cavity, and therefore being movable perpendicular to the panel for vibration attenuation.

This allows the vibrations of the panel to be attenuated by the mass in its damping movement provided by the damping means that keep same suspended in the damping device of the invention. Thus, the device is tuned to cause the mass suspended inside the cavity to vibrate according to the frequency of vibrations to be damped.

Preferably, the damping means are in the form of elastic means and more preferably, in the form of at least one spring. Since the mass is suspended, the elastic means are attached at one end in the upper portion of the cavity, the mass being suspended by attachment thereof at the other end of the elastic means. The elastic means in this case are attached at the upper portion of the cavity so that the mass is suspended due to the effect of gravity.

Alternatively, the damping means can be several elastic elements attached to the mass in different ways from different points of the cavity, as long as they allow movement in the direction of vibrations, i.e., in a direction perpendicular to the solar panel.

Preferably, the mass is arranged suspended by an elastic element that is attached to the upper portion of the cavity, and an elastic element that is attached to the lower portion of said cavity.

The maximum displacement that is possible for the mass in the cavity is that allowed by the damping means due to their damping properties and the walls of the cavity. The cavity will therefore have sufficient space for the mass to move freely without coming into contact with the upper or lower portion. Said cavity will have dimensions such that they allow the guided displacement of the mass as it moves within the cavity. Optionally, the walls of the cavity will have guide elements for the mass or elements that minimise the friction of the mass with respect to the cavity.

The system is formed by at least one damping device that is attachable to the panel, preferably, in its frame in a nestable manner. Thus, the device has a nesting groove in the upper portion in correspondence with the dimensions of the panel frame, so that once the device is nested into the frame, both behave in solidarity. In addition, it can have both removable and permanent attachment means.

According to an alternative embodiment, the nesting groove may be adjustable on the device to be adapted to different types of frames.

One of the advantages of this system is that structural modification of the panel frame is not required, and the device can be attached in a removable manner without damaging or modifying said frame or panel. This means quick assembly of the system and avoids using tools on the panel. In addition, it allows the installation of the system on any type of solar tracker already installed in a quick manner simply by nesting the damping devices.

Optionally, the nesting groove of the damping device comprises an elastic joint for elastic adjustment to the dimensions of the frame. This joint, which can completely or partially cover the groove, establishes pressure between the nesting of the device and the panel, so that it facilitates adjustment to different frames of slightly different thicknesses. Moreover, the joint offers friction which makes it difficult to remove the device from the panel, and prevents same from being damaged during attachment.

Preferably, the system comprises at least one damping device attachable at each lateral end of the panel parallel to the rotation shaft of the solar tracker in a symmetrical manner. Symmetrical is understood to be the same position with respect to a plane of symmetry that is perpendicular to the panel and that passes through the rotation shaft. In this way, there will be the same distance between both devices, compensating for the weight of each side of the panel.

The device, and especially the mass, are an added weight to the panel, in addition to being located at the cantilevered ends of the panel. This causes the total weight of the panel to be greater and the natural vibration frequency of the panels with damping devices to be at higher frequencies.

According to another aspect of the invention, the damping system may comprise a plurality of attachment devices where the distribution of the attachment of damping devices on the panels of the solar tracker is carried out according to a vibration calculation along the solar tracker. Said calculation takes into account different factors to establish the vibrations that may occur in the solar tracker. Based on said vibration calculation, the optimal position of the devices on the panels of the solar tracker is established to dampen the vibrations of the assembly in the most efficient manner, and the devices can be placed on panels alternately, on all panels, or even by attaching several damping devices on the same panel.

As a result of the application of the damping system in the solar tracker, the natural vibration of the assembly is achieved at much higher frequencies and with a lower vibration amplitude, causing the vibration amplitudes to be very reduced at low frequencies. This achieves better behaviour of the assembly by avoiding mechanical vibrations and resonance frequency.

### Description of the figures

Figure 1 shows an embodiment of the solar tracker assembly in which several panels have the damping system.
Figure 2 shows a panel with the damping system, according to one embodiment, formed by two damping devices symmetrically arranged.
Figure 3 shows a profile of the solar tracker in which a panel arranged on the rotation shaft has a device on each side symmetrically.
Figure 4a is a cross-sectional view of a device attached to the panel frame according to an embodiment of the device with damping means.
Figure 4b is a cross-sectional view of a device attached to the panel frame according to an embodiment of the device with a first and second elastic element.
Figure 5 is a perspective view of an embodiment of the damping device of the system.

### Detailed description of the invention

The figures correspond to non-limiting practical exemplary embodiments, and variations in the configuration of the system may occur as long as the essence of the system is not altered. The vibration damping system for a solar tracker (1) comprises at least one damping device (2) attached to a panel (1.1) or to a frame (1.2) of the panel (1.1). Said device (2) comprises a cavity (2.1), where there is a mass (3) attached in a suspended manner to the cavity (2.1) with damping means (4) and the mass (3) being movable inside the cavity (2.1).

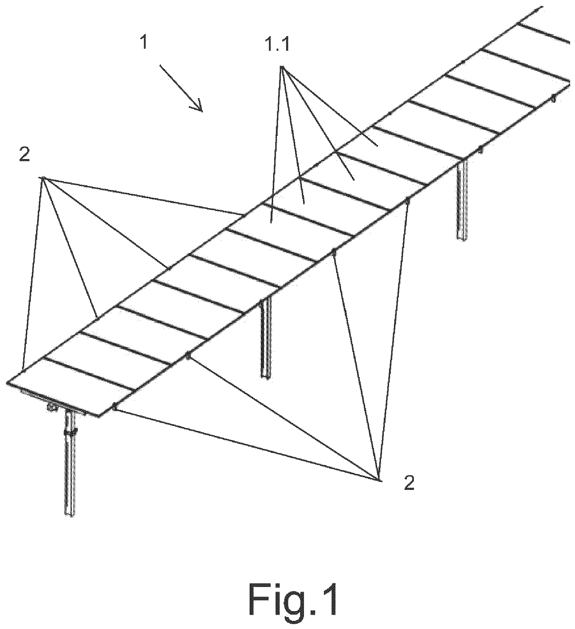

Figure 1 shows a practical embodiment of the invention in which a plurality of devices (2) are arranged distributed on different panels (1.1) of the solar tracker (1). In this way, the devices (2) are solidly joined to the panel (1.1) or the frame (1.2). Thereby, the vibrations transmitted from the panel (1.1) to the device (2) cause the mass (3) to move inside the cavity (2.1), the damping means (4) transmitting the vibrations of the panel (1.1) to the mass (3) and the vibrations of the mass (3) to the panel (1.1). Since the vibrations are opposite, the vibrations of the assembly are damped.

As can be seen in the figures, the device (2) has a preferably rectangular shape, being able to be attached to the panel (1.1) at the upper portion and extending perpendicularly to the panel (1.1). Optionally, the attachment could be provided at the bottom or on the side, all of them being equivalent embodiments.

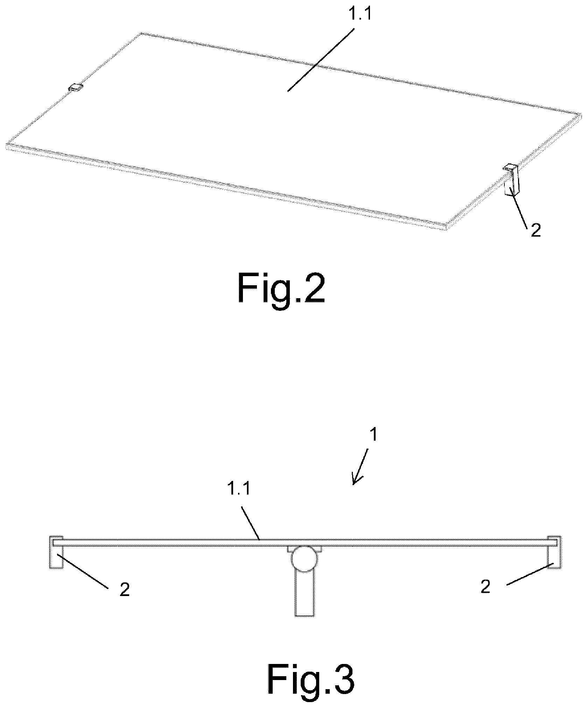

Figure 2 shows in more detail a panel (1.1) in which a device (2) attached to each side of the panel (1.1) is arranged. Preferably attached to the frame (1.2) by nesting. The nesting is made through a groove (2.2) in the upper portion of the device, which has a geometry corresponding to the frame (1.2), allowing its removable attachment. Furthermore, the devices (2) are attached symmetrically, compensating for the weights added to the panel (1.1) with respect to the rotation shaft.

The groove (2.2) is C-shaped like the one shown in Figure 2, although any other shape that allows said attachment to the panel is contemplated.

According to an alternative design, the groove (2.2) can be in the shape of a clamp, or it could have a movable portion that allows the nesting to be adjusted to adapt to different thicknesses of panels (1.1). In said embodiment, the movable upper portion has attachment means to keep the groove (2.2) attached in the panel (1.1).

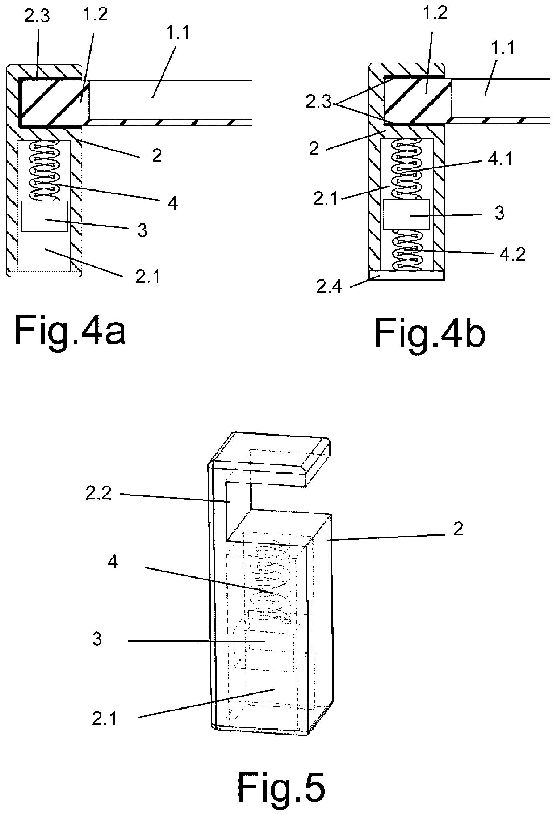

In an alternative embodiment, the groove (2.2) comprises an elastic joint (2.3) so that it can completely cover the groove (2.2), as in Figure 4a, or only partially cover at least one face or part of a face, as in Figure 4b. The elastic joint (2.3) allows nesting by adapting to different frames (1.2) the dimensions of which are different within a certain range. Said elastic joint (2.3) offers greater attachment while it can be made of a material that makes it difficult for the device (2) to slide, and prevents deterioration of the panel (1.1) during attachment.

In another alternative embodiment, the damping device (2) could be attached to the frame (1.2), by mechanical means such as screws. In this embodiment, it would be necessary for the frames (1.2) to be adapted or perforated in the specific places where the devices (2) are arranged.

The device (2) comprises a cavity (2.1) therein, as shown in Figure 4a and Figure 4b, and can be opened on at least one of its faces or closed by means of a cover (2.4), door or similar that allows maintenance, although preferably the cavity (2.1) will be closed to prevent the entry of dirt.

In the embodiment shown in Figure 4a, the device (2) has damping means (4) in the cavity (2.1) in the form of a first elastic element (4.1) that attaches the mass (3) in a suspended manner in the cavity (2.1). The first elastic element (4.1) being a single spring, having both a length and features that are adjusted to the type of damping desired. Alternatively, there could be two or more springs attached to the upper portion of the cavity (2.1).

Figure 4b is an alternative embodiment in which the cavity (2.1) is closed and has damping means (4) in the form of a first elastic element (4.1) attached to the upper portion of the cavity (2.1) and a second elastic element (4.2) attached to the lower portion of the cavity (2.1), in the cover (2.4). In this case, the cavity (2.1) is closed by a lower cover (2.4) that allows opening, but it could also be closed on one side of the cavity (2.1) or even closed without the possibility of opening as mentioned above.

Figure 5 shows a perspective view of an embodiment of the device (2) having a rectangular geometry, with a cavity (2.1) also having square cross section like the mass (3). This configuration of mass (3) and cavity (2.1) having a square cross section and a displacement adjustment, prevents the rotation of the mass within the cavity (2.1).

To facilitate the movement of the mass (3) in the cavity (2.1), the lateral walls may have inner grooves or ribs that establish contact with the mass (3) to prevent lateral movements. In this way, it is ensured that the only possible displacement of the mass (3) is perpendicular with respect to the panel (1.1). Sliding means could also be provided for the mass (3) within the cavity (2.1).

For optimal vibration attenuation, a vibration calculation must be carried out, in which the characteristics of the different components of the device (2) must be specified in order to define the desired damping. In this way, both the weight or shape of the mass (3) and the shape of the damping means (4) can be adjusted.

The damping is also influenced by the planning of the distribution of the devices (2) in the panels (1.1) of the solar tracker (1). According to the practical embodiment of the system shown in Figure 1, an alternating distribution of the damping devices (2) for vibration attenuation can be seen in accordance with a vibration calculation carried out for this purpose.

## Claims

1. A vibration damping system, for those vibrations that are produced in a solar tracker (1), by means of at least one damping device (2) having damping means (4) that absorb the vibrations produced, **characterised in that** the damping device (2) is removably attachable on at least one panel (1.1) of the solar tracker (1), the damping device (2) comprising at least one mass (3) movably suspended along a cavity (2.1) of the device (2) by attachment with damping means (4), and the mass (3) being movable within the cavity (2.1) perpendicular to the panel in the operative position.

2. The damping system according to claim 1, wherein the damping device (2) is attachable to the panel (1.1) in its frame (1.2) by means of nesting provided by an attachment groove (2.2).

3. The damping system according to claim 2, wherein the groove (2.2) is adjustable to the dimensions of the frame (1.2).

4. The damping system according to claim 3 wherein the groove (2.2) comprises an elastic joint (2.3) for adjustment to the dimensions of the frame (1.2).

5. The damping system according to any one of the preceding claims wherein the damping means (4) of the device (2) comprise at least a first elastic element (4.1) attachable to the upper portion of the cavity (2.1) which attaches the suspended mass (3) at its other end.

6. The damping system according to claim 5 wherein the damping means (4) of the device (2) comprise a second elastic element (4.2) for attaching the mass to the lower portion of the cavity (2.1).

7. The damping system according to any one of the preceding claims wherein the lateral walls of the cavity (2.1) are configured for the displacement of the mass (3) within the cavity (2.1) perpendicular to the panel (1.1).

8. The damping system according to any one of the preceding claims which comprises at least two damping devices (2) attachable on a panel (1.1) symmetrically with respect to the shaft of the solar tracker (1).

9. The damping system according to any one of the preceding claims comprising a plurality of damping devices (2) attached according to a distribution in the panels (1.1) of the solar tracker (1) according to a vibration calculation along the solar tracker (1).
